# EUROPÄISCHE PATENTSCHRIFT

(11) **EP 1 429 597 B1**
(45) Veröffentlichungstag und Bekanntmachung des Hinweises auf die Patenterteilung: **14.12.2005**
(21) Anmeldenummer: 01980453.3
(22) Anmeldetag: 28.09.2001
(51) Int. Cl.: A01D 34/14

(54) **MÄHMESSER MIT EINER AUS TEILSCHIENEN ZUSAMMENGESETZTEN MESSERSCHIENE**
MOWING BLADE COMPRISING A BLADE BAR COMPOSED OF BAR SECTIONS
LAME DE COUPE COMPORTANT UNE BARRE DE COUPE CONSTITUEE DE PLUSIEURS BARRES PARTIELLES

(43) Veröffentlichungstag der Anmeldung: 23.06.2004
(73) Patentinhaber: Schumacher, Heinrich-Günter, 57612 Eichelhardt (DE)
(72) Erfinder: Schumacher, Heinrich-Günter, 57612 Eichelhardt (DE)
(74) Vertreter: Harwardt, Günther
(86) Internationale Anmeldenummer: PCT/EP2001/011269
(87) Internationale Veröffentlichungsnummer: WO 2003/028435

(56) Entgegenhaltungen:
- DE-U- 9 016 099
- US-A- 4 805 390
- US-A- 4 854 114
- US-A- 4 942 728
- US-A- 5 040 363

## Beschreibung

Die Erfindung betrifft ein Mähmesser für eine oszillierende, geradlinige Bewegung mit einer Messerschiene, die aus mindestens zwei hintereinander entlang einer Längsachse angeordneten Teilschienen besteht, welche über Verbindungsmittel miteinander verbunden sind.

Solche Mähmesser werden bevorzugt in Erntemaschinen für Halmgut, beispielsweise einem Mähdrescher, eingesetzt. Aufgrund der erheblichen Mähbreiten ergeben sich Mähmesser mit einer Länge von 9 Metern und mehr, die von einem Antrieb hin und her bewegt werden, wobei die an der Messerschiene befestigten Messerklingen das Erntegut in Zusammenwirken mit Mähfingern, die Gegenschneiden bilden, abschneiden. Je nach Einsatz unterliegen die Messerklingen einem mehr oder weniger starken Verschleiß. Während einer Erntekampagne müssen häufig Klingen oder auch sogar das gesamte Mähmesser ausgetauscht werden. Mähmesser mit den obengenannten Längen sind recht flexibel, da sie in der Regel aus einem im Querschnitt relativ dünnen rechteckigen Profil bestehen, so dass der Transport vom Hersteller bis zum Maschinenbetreiber auf dem Feld nur aufwendig zu bewerkstelligen ist. Die Kosten für die Verpackung und den Transport sind daher häufig höher als die für das Mähmesser selbst. Aus diesem Grunde erfolgt auch eine Aufteilung in Sektionen bzw. in Teilschienen, welche erst beim Eintreffen an der Erntemaschine zusammengesetzt werden. So können solche sektionalen Messer eine Länge von etwa 3 Meter aufweisen, so dass beispielsweise für ein 9 Meter langes Mähmesser dann insgesamt drei Sektionen zusammengeführt und verbunden werden. Solche Längen sind noch leicht zu verpacken und zu transportieren. Es erfordert jedoch, dass die drei Sektionen an zwei Verbindungsstellen miteinander zu verbinden sind. Solche Verbindungsstellen unterliegen hohen mechanischen Beanspruchungen, da pro Minute in der Regel mindestens 500 Doppelhübe ausgeführt werden, was also zu über tausend Lastwechseln führt. Neben der Belastung aus der Beschleunigung und Abbremsung der hin- und hergehenden Massen müssen auch noch die Schnittkräfte übertragen werden.

Die US 4 805 390 beschreibt ein Mähmesser mit einer aus Teilschienen zusammengesetzten Messerschiene, welche im Verbindungsbereich jeweils auf die Hälfte ihrer Stärke reduziert sind und sich überlappen. In diesem Zustand sind sie durch Schrauben miteinander verbunden. Während bei der vorgenannten Ausführungsform normale runde Schaftschrauben verwendet werden, ist in der US 4 854 114 vorgeschlagen, anstelle der normalerweise runden Schaftschrauben solche mit einem im Querschnitt ovalen Schaft zu wählen, um in der Beanspruchungsrichtung der Massenkräfte aufgrund der hin- und hergehenden Bewegung einen größeren Querschnitt, der der Scherung unterliegt, zur Verfügung zu stellen.

Außer den Scherkräften treten aber auch Knickkräfte auf, die sich insbesondere an den Verbindungsstellen auswirken, da die Mähmesser aufgrund ihrer Länge nicht präzise vertikal geführt werden können.

Um diese Knickkräfte besser auffangen zu können, ist in der US 4 805 390 vorgeschlagen, eine Mähklinge mit vier Bohrungen so über einer Verbindungsstelle zu platzieren, dass die Stoßfuge abgedeckt wird. Die im Verbindungsbereich auftretenden Knickkräfte sollen dabei zum Teil von der Mähklinge aufgenommen werden. Von Nachteil bei dieser Ausführung ist jedoch, dass aufgrund der normalerweise im Einsatz befindlichen Klingen, die üblicherweise eine Breite von 76,2 mm haben, vier Bohrungen sehr nah beieinander liegen und in den Teilschienen analog dazu ebenfalls in geringem Abstand Bohrungen vorgesehen werden müssen. Es wird hierdurch keine Verbesserung erzielt, sondern es besteht eine erhebliche Bruchgefahr im Bereich der Verbindung. Ein weiterer Nachteil besteht darin, dass im Verhältnis zu den üblicherweise verwendeten Mähklingen, die nur zwei Bohrungen für Verbindungsmittel aufweisen, Sondermähklingen eingesetzt werden müssen, die mit vier Durchgangsbohrungen versehen sind. Es ist ferner auch nur mit geringem Erfolg, aber hohem Aufwand möglich, durch Wärmebehandlung des Materials im Bereich der Verbindung verbesserte Festigkeiten zu erzielen, um die Bruchgefahr zu verringern. Beilagen, die auf den Messerteilschienen aufliegend angeordnet sind, können nicht verwendet werden, da diese zu Sonderbauformen im Bereich der Mähfinger führen würden.

Der Erfindung liegt die Aufgabe zugrunde, ein Mähmesser zu schaffen, dessen Messerschiene aus mehreren Teilschienen aufgebaut ist, bei der der Verbindungsbereich derart ausgelegt ist, dass hohe Kräfte, die aus der hin- und hergehenden Bewegung der Massen resultieren, durch die Verbindungsmittel aufgenommen werden können. Des weiteren soll eine verbesserte Aufnahme der Knickkräfte erfolgen.

Gelöst wird diese Aufgabe erfindungsgemäß durch ein Mähmesser für eine oszillierende geradlinige Bewegung, umfassend
- eine Messerschiene,
   die aus mindestens zwei hintereinander entlang einer Längsachse angeordneten Teilschienen besteht, welche
   - eine durchgehende erste Befestigungsfläche, eine dazu parallele in einem ersten Abstand angeordnete zweite Fläche und an den Längsenden jeweils eine Stirnfläche aufweisen,
   - ausgehend von mindestens einer der Stirnflächen eine Ausnehmung aufweisen, die durch eine zur Befestigungsfläche parallele dritte Fläche begrenzt ist, die mit einem zweiten Abstand zur Befestigungsfläche angeordnet ist, der geringer ist als der erste Abstand,
   - in einem die zweite Fläche und die dritte Fläche aufweisenden Längenabschnitt mit ersten Durchgangsbohrungen versehen sind, die mit vorbestimmten Abständen voneinander und von der Stirnfläche entlang der Längsachse angeordnet sind, und
   - jeweils mit einer Stirnfläche, von der eine Ausnehmung ausgeht, aneinanderstoßend, eine Stoßfuge bildend, angeordnet sind;
- Messerklingen,
   - die jeweils zwei im Abstand angeordnete zweite Durchgangsbohrungen aufweisen,
   - die in Anlage zur Befestigungsfläche sind und
   - von denen eine Messerklinge die Stoßfuge überdeckt;
- eine Verbindungslasche,
   - die an den dritten Flächen der aneinanderstoßenden Teilschienen anliegt und die Stoßfuge überdeckt und zu den in diesen dritten Flächen vorhandenen ersten Durchgangsbohrungen entsprechende dritte Durchgangsbohrungen aufweist,
- mit Verbindungsmitteln die in die ersten Durchgangsbohrungen, die zweiten Durchgangsbohrungen und im Bereich der dritten Fläche die dritten Durchgangsbohrungen eingesetzt sind und die Teilschienen, die Messerklingen und im Bereich der dritten Flächen die Verbindungslasche miteinander verbinden.

Von Vorteil bei dieser Ausbildung ist, dass sowohl die Messerklingen besser an einer Übertragung der Kräfte teilnehmen als auch für die Verbindungslasche ein verbessertes Material benutzt werden kann, das geeignet ist, höhere Kräfte aufzunehmen, und zwar sowohl in Bezug auf die Beanspruchung aus den hin- und hergehenden Massen als auch in Bezug auf die daraus resultierende Knickbeanspruchung, so dass insgesamt der Verbindungsbereich so gehalten werden kann, dass er die Abmaße der Teilschienen im Bereich außerhalb der Ausnehmungen nicht übersteigt.

Günstig wird die Kraftübertragung insbesondere auch dann, wenn eine Messerklinge mit einer zweiten Durchgangsbohrung zu einer ersten Durchgangsbohrung im Bereich einer Ausnehmung und mit einer zweiten Durchgangsbohrung in einem Längenabschnitt außerhalb der Ausnehmung ausgerichtet ist. Damit erfolgt eine Verankerung dieser Messerklinge in einem Bereich der Teilschiene, der die volle Materialstärke aufweist und in einem Bereich, in dem die Verbindungslasche angeordnet ist. Somit erzeugt auch diese Messerklinge eine Verbesserung der Kraftübertragung.

Je nach den auftretenden Kraftverhältnissen können die Verbindungsbereiche, d.h. insbesondere die Länge der Ausnehmungen entlang der Längsachse unterschiedlich gestaltet werden. Bei einem ersten Ausführungsbeispiel ist vorgesehen, dass die Verbindungslasche vier dritte Durchgangsbohrungen und die aneinanderstoßenden Teilschienen in ihren Ausnehmungen jeweils zwei erste Durchgangsbohrungen aufweisen. Ein verlängerter Überlappungsbereich mit der Verbindungslasche wird dadurch erreicht, dass die Verbindungslasche acht dritte Durchgangsbohrungen und die aneinanderstoßenden Teilschienen in ihren Ausnehmungen jeweils vier erste Durchgangsbohrungen aufweisen.

Vorzugsweise besteht die Verbindungslasche aus einem hochfesten Stahl, insbesondere aus einem Federstahl, so dass insbesondere die Knickkräfte günstig aufgenommen werden können und nicht zu einer Schädigung führen. Insbesondere können die Verbindungsverhältnisse dadurch günstig gestaltet werden, dass die Dicke der Verbindungslasche maximal der Differenz aus dem ersten Abstand vermindert um den zweiten Abstand entspricht. Zwar sind vorzugsweise als Verbindungsmittel Kopfschrauben und Muttern vorgesehen, die zu einem schnellen Wechsel der Teilschienen bzw. der einzelnen Mähklingen führen, jedoch ist es auch möglich, als Verbindungsmittel Nieten zu verwenden. Wenn Schrauben verwendet werden, ist gewährleistet, dass diese sich nicht lockern können.

Zwei bevorzugte Ausführungsbeispiele der Erfindung sind in der Zeichnung schematisch dargestellt.

Es zeigt
- Figur 1: eine Vorderansicht eines Teilabschnitts zweier Teilschienen einer Messerschiene mit den zugehörigen Messerklingen im Bereich der Verbindung der beiden Teilschienen,
- Figur 2: eine Ansicht in Pfeilrichtung Z von Figur 1,
- Figur 3: eine Ansicht entsprechend Figur 1 bezüglich eines weiteren Ausführungsbeispiels, bei der der Überlappungsbereich der Verbindungslasche länger ausgeführt ist als bei dem Ausführungsbeispiel nach den Figuren 1 und 2 und
- Figur 4: eine Ansicht Y zur Figur 3.

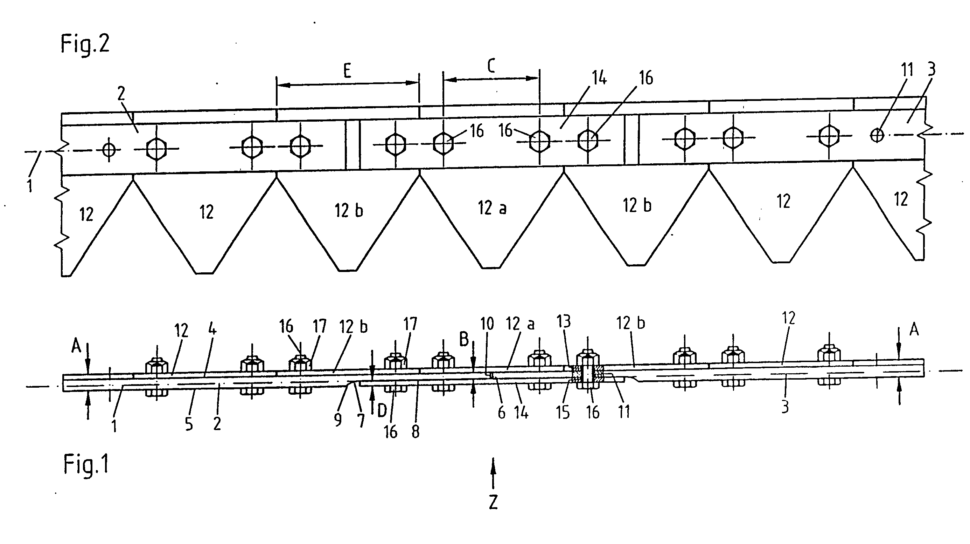

Nachfolgend werden die Figuren 1 und 2 zusammen beschrieben. Die Figuren 1 und 2 zeigen nur einen begrenzten Längenabschnitt eines Mähmessers, in denen der Stoßbereich zweier Teilschienen 2, 3 näher dargestellt ist. Die beiden Teilschienen 2, 3 sind entlang der Längsachse 1 hintereinander angeordnet. Die beiden Teilschienen 2, 3 sind in dem Bereich, in dem sie miteinander verbunden sind, identisch ausgebildet, so dass nur eine Beschreibung der besonderen Gestaltung in diesem Bereich bezüglich der ersten Teilschiene 2 erfolgt. Die erste Teilschiene 2 weist eine Befestigungsfläche 4 auf, die durchgehend eben gestaltet ist. Sie weist ferner eine dazu parallel mit dem ersten Abstand A angeordnete zweite Fläche 5 auf, die an einer Ausnehmung 7, welche von einer Stirnfläche 6 ausgeht, und eine mit einem im Verhältnis zur zweiten Fläche 5 geringeren Abstand, nämlich dem zweiten Abstand B, zur Befestigungsfläche 4 angeordnete dritte Fläche 8 aufweist, endet. Die Ausnehmung 7 endet mit einer Übergangsfläche 9 an der zweiten Fläche 5. Der zweite Abstand B ist geringer als der erste Abstand A gestaltet.

Ferner ist erkennbar, dass die beiden Teilschienen 2, 3 mit der Stoßfuge 10 aneinanderstoßend angeordnet sind. Ausgehend von der Stoßfuge 10 weist die zweite Teilschiene 3 eine der ersten Teilschiene 2 entsprechende Ausnehmung auf. Für die Gestaltung der zweiten Teilschiene 3 ist Spiegelsymmetrie zur ersten Teilschiene 2 bezüglich einer Symmetrieebene, die durch die Stoßfuge 10 dargestellt ist, gegeben.

Im Bereich der Ausnehmung 7 und in dem weiteren Bereich der ersten Teilschiene 2 sind erste Durchgangsbohrungen 11 angeordnet. Auf der Befestigungsfläche 4 der Teilschienen 2, 3 liegen Messerklingen 12 auf, wobei diese jeweils zwei zweite Durchgangsbohrungen 13 besitzen, die im Abstand C von einander angeordnet sind. Jede Messerklinge 12 weist eine Breite E auf. Sie sind aneinander anliegend entlang der Längsachse 1 hintereinander angeordnet, wobei eine der Messerklingen 12, nämlich die Messerklinge 12a die Stoßfuge 10 überlappend angeordnet ist, so dass eine ihrer zweiten Durchgangsbohrungen 13 mit einer ersten Durchgangsbohrung 11 der ersten Teilschiene 2 und die andere der beiden zweiten Durchgangsbohrungen 13 mit einer entsprechenden ersten Durchgangsbohrung 11 der zweiten Teilschiene 3 ausgerichtet ist. Ferner ist erkennbar, dass die zu der Messerklinge 12a benachbarten Messerklingen 12b mit ihren zweiten Durchgangsbohrungen 13 so angeordnet sind, dass sie mit einer ersten Durchgangsbohrung 11, die sich noch im Bereich der Ausnehmung 7 der ersten Teilschiene 2 befindet, übereinstimmen, während die zugehörige erste Durchgangsbohrung zu der weiteren zweiten Durchgangsbohrung der Messerklinge 12, in einem Längenabschnitt liegt, in dem die Befestigungsfläche 4 zur zweiten Fläche 5 mit dem größeren Abstand A angeordnet ist, also dicker ausgebildet ist. Die Messerklinge 12b überdeckt also die Stoßfuge 10 auf der der dritten Fläche abgewandten Seite. In den beiden Ausnehmungen der beiden Teilschienen 2, 3 liegt eine Verbindungslasche 14, deren Dicke D maximal der Differenz aus dem ersten Abstand A vermindert um den zweiten Abstand B beträgt, so dass sie nicht über die zweite Fläche 5 vorragt. Sie weist insgesamt vier dritte Durchgangsbohrungen 15 auf, so dass jeweils zwei dritte Durchgangsbohrungen 15 zu den ersten Durchgangsbohrungen 11 im Bereich der zugehörigen Ausnehmung 7 der ersten Teilschiene 2 angeordnet sind. Eine entsprechende Anordnung ist für die zweite Teilschiene 3 getroffen. Die Verbindungslasche 14 überlappt somit auch die Stoßfuge 10. Sie kann aus einem hochfesten Material, beispielsweise Federstahl, hergestellt sein. Die in der Abmessung reduzierten Abschnitte der ersten Teilschiene 2 und zweiten Teilschiene 3 im Bereich der Ausnehmung 7, in denen die Befestigungsfläche 4 und die dritte Fläche 8 mit dem verringerten Abstand B zueinander angeordnet sind, werden somit beidseitig, d.h. einerseits von der Verbindungslasche 14 und andererseits von den Mähklingen 12a, 12b gestützt, wobei zur Verbindung Kopfschrauben 16 in Verbindung mit Muttern 17 als Verbindungsmittel dienen. Somit können zur Verbindung der beiden Teilschienen 2, 3 die Verbindungsmittel genutzt werden, die ohnehin für die Anbringung der Messerklingen 12 erforderlich sind, wobei auch noch das Raster eingehalten ist, das durch den Bohrungsabstand C der zweiten Durchgangsbohrungen 13 der Messerklingen 12 vorgegeben ist.

Bei den beiden Teilschienen 2, 3 sind nur die aneinanderstoßenden Bereiche dargestellt. Sie sind insgesamt länger ausgebildet, wie zuvor beschrieben, d.h. haben jeweils etwa drei Meter Länge, wobei zwei solcher Teilschienen 2, 3 aneinanderstoßen. Eine Teilschiene, beispielsweise die Teilschiene 2 kann an einem Ende mit einem Verbindungskopf zur Verbindung mit einem Messerantrieb gestaltet sein. Die Messer sind dann beispielsweise in Mähfingern geführt, wie wie sie in der US 4 854 114 dargestellt sind.

Bei der Ausführungsform gemäß der Figuren 1 und 2 ist also der Verbindungsbereich so gestaltet, dass die Verbindungslasche 14 mit drei Messerklingen in Wirkverbindung steht.

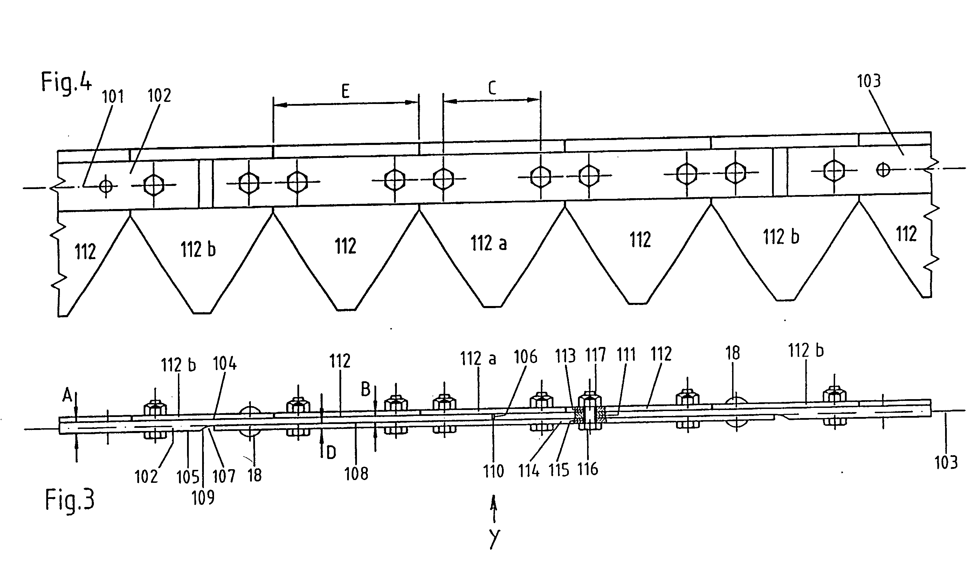

Die Gestaltung des Verbindungsbereiches, der anhand der beiden Teilschienen 2, 3 erläutert wurde, ist bei Ausführungen mit mehr oder zwei Teilschienen anwendbar. Bei der Ausführungsform gemäß den Figuren 3 und 4 besteht lediglich im Verhältnis zu der Ausführungsform gemäß den Figuren 1 und 2 ein Unterschied darin, dass der Verbindungsbereich länger ausgeführt ist. Die Beschreibung im Zusammenhang mit den Figuren 1 und 2 gilt auch für die Bauteile der Ausführungsform gemäß den Figuren 3 und 4, wobei für gleiche Bauteile Positionsnummern gewählt wurden, die zu denen der entsprechenden Bauteile der Figuren 1 und 2 einen Zahlenwert aufweisen, der um den Zahlenwert hundert erhöht ist. Insofern wird hinsichtlich der Beschreibung dieser Bauteile auf die Beschreibung zu den entsprechenden Bauteilen im Zusammenhang mit Figuren 1 und 2 verwiesen. Nachfolgend werden jedoch die Unterschiede näher erläutert. Gegenüber der Ausführungsform gemäß Figuren 1 und 2 ist die Ausnehmung 107 in der ersten und der zweiten Teilschiene 102, 103 entlang der Längsachse 101 länger ausgeführt, so dass ein größerer Längenabschnitt der ersten Teilschiene 102 mit einer Anordnung der zweiten Fläche 105 im Verhältnis zur Befestigungsfläche 104 mit dem verringerten zweiten Abstand B gegeben ist. Es sind in diesem Bereich insgesamt vier erste Durchgangsbohrungen 111 vorgesehen, so dass an der Verbindung insgesamt fünf Messerklingen 112a, 112b beteiligt sind. Die Verbindungslasche 114 ist ebenfalls entsprechend länger gestaltet. Nur zur Andeutung, dass auch andere Verbindungsmittel zur Verbindung der ersten Teilschiene 102 und der zweiten Teilschiene 103 unter Nutzung der Messerklingen 112a, 112b und der Verbindungslasche 114 verwendet werden können, sind an zwei Stellen Nieten 18 dargestellt. Bei der Ausführungsform gemäß Figuren 3 und 4 ist die Belastung auf eine größere Anzahl von Kopfschrauben, d.h. Verbindungsmittel verteilt als bei der Ausführungsform gemäß Figuren 1 und 2.

### Bezugszeichenliste

- 1, 101: Längsachse
- 2, 102: erste Teilschiene
- 3, 103: zweite Teilschiene
- 4, 104: Befestigungsfläche
- 5, 105: zweite Fläche
- 6, 106: Stirnfläche
- 7, 107: Ausnehmung
- 8, 108: dritte Fläche
- 9, 109: Übergangsfläche
- 10, 110: Stoßfuge
- 11, 111: erste Durchgangsbohrung
- 12, 12a, 12b, 112, 112a, 112b: Messerklinge
- 13, 113: zweite Durchgangsbohrung
- 14, 114: Verbindungslasche
- 15, 115: dritte Durchgangsbohrung
- 16, 116: Kopfschraube / Verbindungsmittel
- 17, 117: Mutter / Verbindungsmittel
- 18: Niet / Verbindungsmittel

## Patentansprüche

1. Mähmesser für eine oszillierende geradlinige Bewegung, umfassend
- eine Messerschiene,
die aus mindestens zwei hintereinander entlang einer Längsachse (1, 101) angeordneten Teilschienen (2, 3, 102, 103) besteht, welche
- eine durchgehende erste Befestigungsfläche (4, 104), eine dazu parallele in einem ersten Abstand (A) angeordnete zweite Fläche (5, 105) und an den Längsenden jeweils eine Stirnfläche (6, 106) aufweisen,
- ausgehend von mindestens einer der Stirnflächen (6, 106) eine Ausnehmung (7, 107) aufweisen, die durch eine zur Befestigungsfläche (4, 104) parallele dritte Fläche (8, 108) begrenzt ist, die mit einem zweiten Abstand (B) zur Befestigungsfläche (4, 104) angeordnet ist, der geringer ist als der erste Abstand (A),
- in einem die zweite Fläche (5, 105) und die dritte Fläche (8, 108) aufweisenden Längenabschnitt mit ersten Durchgangsbohrungen (11, 111) versehen sind, die mit vorbestimmten Abständen voneinander und von der Stirnfläche (6, 106) entlang der Längsachse (1, 101) angeordnet sind, und
- jeweils mit einer Stirnfläche (6, 106), von der eine Ausnehmung (7, 107) ausgeht, aneinanderstoßend, eine Stoßfuge (10, 110) bildend, angeordnet sind;
- Messerklingen (12 ,112),
- die jeweils zwei im Abstand (C) angeordnete zweite Durchgangsbohrungen (13,113) aufweisen,
- die in Anlage zur Befestigungsfläche (4, 104) sind und
- von denen eine Messerklinge (12a, 112a) die Stoßfuge (10, 110) überdeckt;
- eine Verbindungslasche (14, 114),
- die an den dritten Flächen der aneinanderstoßenden Teilschienen (2, 3, 102, 103) anliegt und die Stoßfuge (10, 110) überdeckt und zu den in diesen dritten Flächen (8, 108) vorhandenen ersten Durchgangsbohrungen (11, 111) entsprechende dritte Durchgangsbohrungen (15, 115) aufweist,
- mit Verbindungsmitteln (16, 17, 18, 116, 117)
- die in die ersten Durchgangsbohrungen (11, 111), die zweiten Durchgangsbohrungen (13, 113) und im Bereich der dritten Fläche (8, 108) die dritten Durchgangsbohrungen (15, 115) eingesetzt sind und die Teilschienen (2, 3, 102, 103), die Messerklingen (12, 12a, 112, 112a) und im Bereich der dritten Flächen (8, 108) die Verbindungslasche (14, 114) miteinander verbinden.

2. Mähmesser nach Anspruch 1,
**dadurch gekennzeichnet,**
**dass** eine Messerklinge (12a, 112a) mit einer zweiten Durchgangsbohrung (13, 113) zu einer ersten Durchgangsbohrung (11, 111) im Bereich der Ausnehmung (7, 107) und mit einer zweiten Durchgangsbohrung (13, 113) in einem Längenabschnitt außerhalb der Ausnehmung (7, 107) ausgerichtet ist.

3. Mähmesser nach Anspruch 2,
**dadurch gekennzeichnet,**
**dass** die Verbindungslasche (14) vier dritte Durchgangsbohrungen (15) und die aneinanderstoßenden Teilschienen (2, 3) in ihren Ausnehmungen (7) jeweils zwei erste Durchgangsbohrungen (11) aufweisen.

4. Mähmesser nach Anspruch 3,
**dadurch gekennzeichnet,**
**dass** die Verbindungslasche (114) acht dritte Durchgangsbohrungen (115) und die aneinanderstoßenden Teilschienen (102, 103) in ihren Ausnehmungen (107) jeweils vier erste Durchgangsbohrungen (111) aufweisen.

5. Mähmesser nach Anspruch 1,
**dadurch gekennzeichnet,**
**dass** die Verbindungslasche (14, 114) aus einem hochfesten Stahl, insbesondere Federstahl hergestellt ist.

6. Mähmesser nach Anspruch 1,
**dadurch gekennzeichnet,**
**dass** die Dicke (D) der Verbindungslasche (14, 114) maximal der Differenz aus dem ersten Abstand (A) vermindert um den zweiten Abstand (B) entspricht.

7. Mähmesser nach Anspruch 1,
**dadurch gekennzeichnet,**
**dass** die Verbindungsmittel durch Kopfschrauben (15, 115) und Muttern (16, 116) dargestellt sind.

8. Mähmesser nach Anspruch 1,
**dadurch gekennzeichnet,**
**dass** die Verbindungsmittel durch Nieten (18) dargestellt sind.

## Claims

1. Mowing sickle for an oscillating linear motion, comprising
- a sickle bar,
which comprises at least two bar sections (2, 3, 102, 103) arranged one behind the other along a longitudinal axis (1, 101), which
- have a continuous first attachment face (4, 104), a second face (5, 105) arranged parallel at a first distance (A) thereto and at the longitudinal ends, respectively, a front face (6, 106),
- have, starting from at least one of the front faces (6, 106), a recess (7, 107), which is limited by a third face (8, 108) arranged parallel to the attachment face (4, 104) and which is arranged at a second distance (B) relative to the attachment face (4; 104), which is smaller than the first distance (A),
- are provided in a length portion comprising the second face (5, 105) and the third face (8, 108) with first through bores (11, 111), which are arranged at predetermined distances from each other and from the front face (6, 106) along the longitudinal axis (1, 101), and
- are arranged, respectively, with a front face (6, 106), starting from a recess (7, 107) abutting each other and forming a butt joint (10, 110),
- blades (12, 112),
- which, respectively, have two second through bores (13, 113) arranged at a distance (C),
- which are abutting the attachment face (4, 104) and
- of which one blade (12a, 112a) covers the butt joint (10, 110),
- a connecting fish plate (14, 114),
- which abuts the third faces of the bar sections (2, 3, 102, 103), which abut each other, and covers the butt joint (10, 110) and having third through bores (15, 115) corresponding to the first through bores (11, 111) provided in the third face (8, 108), and
- connection means (16, 17, 18, 116, 117)
- which are inserted into the first through bores (11, 111), the second through bores (13, 113) and in the area of the third face (8, 108) into the third through bores (15, 115) and connect the bar sections (2, 3, 102, 103), the blades (12, 12a, 112, 112a) and, in the area of the third faces (8, 108), the connecting fish plate (14, 114) to each other.

2. Mowing sickle according to claim 1,
**characterised in that**
one blade (12a, 112a) is aligned with a second through bore (13, 113) to a first through bore (11, 111) in the area of the recess (7, 107) and with a second through bore (13, 113) in a length portion outside the recess (7, 107).

3. Mowing sickle according to claim 2,
**characterised in that**
the connecting fish plate (14) has four third through bores (15) and the bar sections (2, 3) abutting each other, have, respectively, in their recesses (7) two first through bores (11).

4. Mowing sickle according to claim 3,
**characterised in that**
the connecting fish plate (114) has eight third through bores (115) and the bar sections (102, 103) abutting each other, have in their recesses (107), respectively, four first through bores (111).

5. Mowing sickle according to claim 1,
**characterised in that**
the connecting fish plate (14, 114) is made from a high-strength steel, especially spring steel.

6. Mowing sickle according to claim 1,
**characterised in that**
the thickness (D) of the connecting fish plate (14, 114) corresponds at a maximum to the difference between the first distance (A) minus the second distance (B).

7. Mowing sickle according to claim 1,
**characterised in that**
the connection means are provided in the form of head screws (15, 115) and nuts (16, 116).

8. Mowing sickle according to claim 1,
**characterised in that**
the connection means are provided in the form of rivets (18).

## Revendications

1. Couteau de moissonnage pour un mouvement oscillant rectiligne, comportant
- un rail de couteau
qui est constitué par au moins deux rails partiels (2, 3, 102, 103) agencés l'un derrière l'autre le long d'un axe longitudinal (1, 101), qui
- comprennent une première surface de fixation continue (4, 104), une seconde surface (5, 105) parallèle à celle-ci et agencée à une première distance (A) et une surface frontale respective (6, 106) aux extrémités longitudinales,
- présentent un évidement (7, 107) partant de l'une au moins des surfaces frontales (6, 106), qui est délimité par une troisième surface (8, 108) parallèle à la surface de fixation (4, 104), qui est agencée à une seconde distance (B) de la surface de fixation (4, 104) inférieure à la première distance (A),
- sont pourvus de premiers perçages traversants (11, 111) dans un tronçon de longueur présentant la seconde surface (5, 105) et la troisième surface (8, 108), qui sont ménagés à des distances prédéterminées les uns des autres et de la surface frontale (6, 106) le long de l'axe longitudinal (1, 101), et qui
- sont agencés bout à bout chacun par une surface frontale (6, 106) en formant une jointure (10, 110), surface de laquelle part un évidement (7, 107),
- des lames de couteau (12, 112) qui
- présentent chacune deux seconds perçages traversants (13, 113) ménagés à une distance (C) l'un de l'autre,
- sont en appui contre la surface de fixation (4, 104), et
- dont une lame de couteau (12a, 112a) recouvre la jointure (10, 110),
- une patte de liaison (14, 114) qui
prend appui contre les troisièmes surfaces des rails partiels (2, 3, 102, 103) disposés bout à bout, et qui recouvre la jointure (10, 110) et qui présente des troisièmes perçages traversants (15, 115) correspondant aux premiers perçages traversants (11, 111) prévus dans ces troisièmes surfaces (8, 108),
- et comportant des moyens de liaison (16, 17, 18, 116, 117)
qui sont mis en place dans les premiers perçages traversants (11, 111), dans les seconds perçages traversants (13, 113) et, dans la zone de la troisième surface (8, 108), dans les troisièmes perçages traversants (15, 115) et qui relient mutuellement les rails partiels (2, 3, 102, 103), les lames de couteau (12, 12a, 112, 112a) et, dans la zone des troisièmes surfaces (8, 108), la patte de liaison (14, 114).

2. Couteau de moissonnage selon la revendication 1, **caractérisé en ce qu'**une lame de couteau (12a, 112a) est alignée avec un second perçage traversant (13, 113) par rapport à un premier perçage traversant (11, 111) dans la zone de l'évidement (7, 107) et avec un second perçage traversant (13, 113) dans un tronçon de longueur à l'extérieur de l'évidement (7, 107).

3. Couteau de moissonnage selon la revendication 2, **caractérisé en ce que** la patte de liaison (14) comprend quatre troisièmes perçages traversants (15) et les rails partiels (2, 3) disposés bout à bout présentent dans leurs évidements (7) chacun deux premiers perçages traversants (11).

4. Couteau de moissonnage selon la revendication 3, **caractérisé en ce que** la patte de liaison (114) présente huit troisièmes perçages traversants (115) et les rails partiels (102, 103) disposés bout à bout présentent dans leurs évidements (107) chacun quatre premiers perçages traversants (111).

5. Couteau de moissonnage selon la revendication 1, **caractérisé en ce que** la patte de liaison (14, 114) est réalisée d'un acier hautement résistant, en particulier d'acier ressort.

6. Couteau de moissonnage selon la revendication 1, **caractérisé en ce que** l'épaisseur (D) de la patte de liaison (14, 114) correspond au maximum à la différence de la première distance (A) réduite de la seconde distance (B).

7. Couteau de moissonnage selon la revendication 1, **caractérisé en ce que** les moyens de liaison sont représentés par des vis à tête (15, 115) et par des écrous (16, 116).

8. Couteau de moissonnage selon la revendication 1, **caractérisé en ce que** les moyens de liaison sont représentés par des rivets (18).
